# EUROPEAN PATENT APPLICATION

(11) **EP 4 786 046 A1**
(43) Date of publication of application: **05.08.2026**
(21) Application number: 23961744.2
(22) Date of filing: 18.12.2023
(51) Int. Cl.: B01J 23/89, B01J 37/02, B01J 37/03

(54) **MONOLITHIC CATALYTIC MATERIAL AND MONOLITHIC CATALYST, PREPARATION METHOD THEREFOR AND USE THEREOF, AND CATALYTIC OXIDATION METHOD**

(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: LIU, Shida, Dalian, Liaoning 116045 (CN); HOU, Shuandi, Dalian, Liaoning 116045 (CN); WANG, Xuehai, Dalian, Liaoning 116045 (CN); LIU, Shuhe, Dalian, Liaoning 116045 (CN); WANG, Kuanling, Dalian, Liaoning 116045 (CN)
(74) Representative: Hoffmann Eitle
(86) International application number: PCT/CN2023/139521
(87) International publication number: WO 2025/129395

(57) **Abstract**

A monolithic catalytic material and a monolithic catalyst, a preparation method therefor and use thereof, and a catalytic oxidation method. The monolithic catalytic material comprises a structured support and a modified alumina coating distributed on the structured support. The modified alumina coating comprises an alumina-containing coating and a manganese-cobalt composite oxide supported on the surface of the alumina-containing coating. The monolithic catalytic material has better catalytic activity.

## Description

### TECHNICAL FIELD

The invention relates to the technical field of exhaust gas treatment, in particular to a monolithic catalytic material, a monolithic catalyst, a preparation method therefor and use thereof, and a catalytic oxidation method.

### BACKGROUND ART

Catalytic oxidation is one of the commonly used means of treating volatile organic compounds (VOCs) in an exhaust gas of the petrochemical industry. Due to the large volume of gas to be treated and the high flow rate, honeycomb ceramics are generally used as the catalyst carriers. The active center used for catalytic oxidation is generally a precious metal active center. Since the precious metal active center is expensive, people consider using non-precious metal active centers to replace the precious metal active center. Among them, manganese has a variety of oxidation states, and can carry out the redox reactions between different oxidation states, so that the oxidation activity of Mn-based catalysts can be effectively regulated and controlled. By controlling the oxidation state and coordination environment of manganese, the catalyst can show desirable activity. Mn-based catalysts usually have good catalytic stability. Manganese has high anti-poisoning and anti-sintering properties in the redox reactions, and can maintain excellent catalytic activity under a variety of exhaust gas components and conditions, thereby extending the service life of the catalysts.

Mn-based catalytic oxidation catalysts can be prepared by chemical synthesis method or direct pyrolysis method. The method has the characteristics of simple preparation process, but low catalytic activity per unit mass. Mn metal salts can also be loaded on a carrier by means of the impregnation method or the chemical deposition method, and then converted into the corresponding oxide after drying and calcining. The dispersion of the metal particles obtained through the method is improved compared with the non-loading method, and the preparation process is simple, but the degree of dispersion often decreases with an increase of the metal loading amount. It is also possible to dope a precursor compound containing Mn into a slurry system and then coating it on a carrier honeycomb ceramic. Monolithic catalysts are the mainstream of VOC catalytic oxidation catalysts, but the Mn loading amount in the method is not high.

The production of Mn-based monolithic catalysts is generally based on the originally common slurry formula, adding a small amount of Mn, or loading Mn on a slurry coating after the slurry coating is dried, calcined and stabilized. The former is affected by the stability of the slurry, and if too much Mn is added, it will seriously affect the stability of said slurry; the latter is difficult to interact with the precious metal center if Mn is simply loaded.

CN111085217A discloses a three-dimensional porous Mn-Co microsphere grown on cordierite, the three-dimensional porous Mn-Co microspheres are composite spineloxide formed by doping cobalt species into a framework of manganese oxide, have a three-dimensional porous structure, are formed by aggregating a plurality of nanometer particles, and are uniformly dispersed on the pore channel walls of honeycomb ceramic cordierite. The synthesis process does not introduce a slurry, and is prepared by growing cobalt-manganese oxide directly on the surface of cordierite, but its loading capacity is limited, and the amount of cobalt-manganese oxide on the active center is severely limited. At the same time, because there are not enough microscopic pores and corresponding specific surface area, it lacks the ability to subsequently load precious metals. Its catalytic performance needs to be further improved and enhanced.

### SUMMARY OF THE INVENTION

The present invention aims to overcome the defects in the prior art, and provides a monolithic catalytic material and a monolithic catalyst, a preparation method therefor and use thereof, and a catalytic oxidation method. The monolithic catalyst provided by the present invention has a high catalytic oxidation activity when used in the catalytic oxidation reaction of VOCs.

The first aspect of the present invention provides a monolithic catalytic material comprising a structured support and a modified alumina coating distributed on the structured support, the modified alumina coating comprises an alumina-containing coating and a manganese-cobalt composite oxide supported on the surface of the alumina-containing coating.

Preferably, the manganese-cobalt composite oxide has a morphology of spherical or quasi-spherical particles formed by crossing and stacking a rod-like structure.

Preferably, the surface layer of the rod-like structure is MnO₂, and the interior of the rod-like structure is MnCo₂O₄; further preferably, the MnO₂ surface layer of the rod-like structure has a thickness within the range of 1~3nm.

The second aspect of the present invention provides a preparation method of a monolithic catalytic material, the preparation method comprises the following steps:
(1) introducing a coating slurry containing alumina and/or an alumina precursor into a structured support, then drying and optionally calcining to obtain a structured support loaded with an alumina-containing coating;
(2) subjecting the structured support loaded with an alumina-containing coating to a reaction with a manganese precursor and a cobalt precursor in the presence of a solvent, subsequently drying.

Preferably, the coating slurry comprises: alumina and a solvent, and optionally a surfactant, optionally an alumina precursor, and optionally a silicon source. Further preferably, the pH value of the coating slurry is within the range of 3~4, and/or, the viscosity of the coating slurry is within the range of 10~100 mPa·s.

The third aspect of the present invention provides a monolithic catalyst, comprising the monolithic catalytic material according to the first aspect or the monolithic catalytic material produced with the preparation method according to the second aspect, and a precious metal component.

The fourth aspect of the present invention provides a method for preparing a monolithic catalyst, the method comprising: impregnating the monolithic catalytic material according to the first aspect or the monolithic catalytic material produced with the preparation method according to the second aspect in an impregnation liquid containing a noble metal precursor, adjusting the pH to alkalinity, standing still, and then drying and calcining.

The fifth aspect of the present invention provides a use of the monolithic catalytic material according to the first aspect or the monolithic catalyst according to the third aspect in a catalytic oxidation reaction, preferably in a catalytic oxidation reaction of VOCs.

The sixth aspect of the present invention provides a method for catalytic oxidation of VOCs, the method comprises: contacting exhaust gas containing VOCs with the monolithic catalyst according to the third aspect to carry out a catalytic oxidation reaction.

The present invention introduces an alumina-containing coating on the surface of a structured support, and loads the manganese-cobalt composite oxide on the alumina-containing coating, such that the bimetallic oxide system of the monolithic catalytic material has higher catalytic activity. In a case of preferably, the special morphology and composition of the manganese-cobalt composite oxide are more conducive to the high dispersion of noble metals in the subsequent process, and are more beneficial to improving the catalytic activity of the monolithic catalyst.

### BRIEF DESCRIPTION OF THE DRAWINGS

FIG. 1 illustrates a scanning electron microscope photograph of the monolithic catalytic material prepared in Example 1;
FIG. 2 illustrates an XRD spectrogram of the monolithic catalytic material prepared in Example 1;
FIG. 3 illustrates a Raman spectrogram of the monolithic catalytic material prepared in Example 1;
FIG. 4 illustrates a SEM photograph of the monolithic catalytic material prepared in Example 1;
FIG. 5 illustrates a STEM photograph of the monolithic catalytic material prepared in Example 1;
FIG 6 illustrates a stability evaluation curve diagram of Example 1.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

Unless otherwise specified in the invention, all percentages and percentage contents are based on mass.

The first aspect of the present invention provides a monolithic catalytic material comprising a structured support and a modified alumina coating distributed on the structured support, the modified alumina coating comprises an alumina-containing coating and a manganese-cobalt composite oxide supported on the surface of the alumina-containing coating.

In the present invention, the term "monolithic catalytic material" refers to a catalytic material comprising a structured support and a modified alumina coating distributed on the structured support; the "structured support" refers to a carrier with a regular structure.

In the present invention, the modified alumina coating may be distributed on the inner surface and/or outer surface of the structured support.

According to a preferred embodiment of the present invention, the structured support is contained in an amount of 80~95wt%, more preferably 85~92wt% such as 85wt%, 86wt%, 87wt%, 88wt%, 89wt%, 90wt%, 91wt% or 92wt%; and the modified alumina coating is contained in an amount of 5~20wt%, more preferably 8~15wt%, such as 8wt%, 9wt%, 10wt%, 11wt%, 12wt%, 13wt%, 14wt% or 15wt%, based on the total amount of the monolithic catalytic material.

In the present invention, the content of the structured support and the content of the modified alumina coating in the monolithic catalytic material can be measured and obtained by conventional technical means in the field, for example, obtained by weighing the weight of the material before and after coating, or determining its weight based on the shape and manufacturer of the structured support, and then calculating the percentage content of the structured support.

According to the present invention, preferably, the alumina-containing coating is contained in an amount of 85~95wt%, such as 85wt%, 86wt%, 87wt%, 88wt%, 89wt%, 90wt%, 91wt%, 92wt%, 93wt%, 94wt%, or 95wt%, and the manganese-cobalt composite oxide is contained in an amount of 5~15wt%, such as 5wt%, 6wt%, 7wt%, 8wt%, 9wt%, 10wt%, 11wt%, 12wt%, 13wt%, 14wt%, or 15wt%, based on the total amount of the modified alumina coating.

In the present invention, based on the total amount of the modified alumina coating, the contents of an alumina-containing coating and a manganese-cobalt composite oxide are measured by inductively coupled plasma emission spectrometer (ICP) to obtain the metal element content, and then converting the metal element content into the metal oxide content. Specifically, the AVIO 500 inductively coupled plasma emission spectrometer manufactured by the PerkinElmer Company in the United States of America (USA) can be used. Before the test, aqua regia is used for digestion, with a solid-liquid ratio of 1:3 and a temperature of 50°C, until it is clarified.

According to a preferred embodiment of the present invention, the manganese-cobalt composite oxide comprises MnCo₂O₄ and MnO₂. Preferably, a part of Mn and Co calculated in terms of MnCo₂O₄ is contained in an amount of 4~15wt%, for example, 4wt%, 5wt%, 6wt%, 7wt%, 8wt%, 9wt%, 10wt%, 11wt%, 12wt%, 13wt%, 14wt% or 15wt%, and the remaining part of Mn calculated in terms of MnO₂ is contained in an amount of 0.1~1wt%, such as 0.1wt%, 0.2wt%, 0.3wt%, 0.4wt%, 0.5wt%, 0.6wt%, 0.7wt%, 0.8wt%, 0.9wt% or 1wt%, based on the total amount of the modified alumina coating. By using the monolithic catalytic material provided by the invention, even if a relatively small amount of Mn and Co is used, a relatively high catalytic oxidation performance can be obtained, and the pore blocking phenomenon caused by a large content of Mn and Co can be avoided.

In the present invention, the content of a part of Mn and Co calculated in terms of MnCo₂O₄ and the content of the remaining part of Mn calculated in terms of MnO₂ are obtained by ICP testing, and the specific testing method is as mentioned above. Wherein a part of Mn exists in the form of MnO₂, and a part of Mn and Co exists in the form of MnCo₂O₄. The content of Co and Mn is obtained by ICP testing, and then the content of a part of Mn and Co calculated in terms of MnCo₂O₄ is obtained through conversion of Co. The difference between the content of Mn obtained by ICP testing and the content of Mn existing in the form of MnCo₂O₄ is exactly the content of the remaining part of Mn calculated in terms of MnO₂.

According to the present invention, preferably, the modified alumina coating has a thickness within the range of 20~50µm, further preferably 25~35µm.

In the invention, the thickness of the modified alumina coating is measured by SEM imaging using a thermal field emission scanning electron microscope SU5000 manufactured by Hitachi Company in Japan, with operating parameters as follows: the resolution for secondary electron microscopy imaging is 30 kV, the resolution for backscattered electrons is 15 kV, and a beam current within the range of 0-200 nA.

According to the present invention, preferably, the modified alumina coating has a specific surface area within the range of 100~200m²/g. With the preferred embodiment, the modified alumina coating provides a larger specific surface area, which is more conducive to the subsequent dispersion of precious metals.

According to the present invention, preferably, the modified alumina coating has an average pore size within the range of 5~12nm. The modified alumina coating provided by the invention has a large average pore size, avoiding the pore blocking phenomenon caused by high contents of Mn and Co in the prior art.

The invention measures the specific surface area and average pore size of the sample by a physical adsorption instrument, and adopts the AUTO-SORB-1-MP type analyzer manufactured by the Quantachrome Company in the USA. The operating conditions are as follows: before the test, the sample is vacuum degassed at 300°C for 6 hours on an external degassing station. Nitrogen gas is then used as the adsorbent, and the adsorption and desorption test is carried out at the liquid ammonia temperature (77·K). The specific surface area of the sample is calculated by the Bninauer-Emmett-Teller (BET) method.

According to the catalytic material provided by the present invention, the alumina-containing coating may be completely composed of alumina, or may also comprise other heat-resistant inorganic oxides. Preferably, the alumina-containing coating further comprises a heat-resistant inorganic oxide, which is at least one of silicon oxide, titanium oxide, cerium oxide, lanthanum oxide and zirconium oxide, more preferably silicon oxide.

The present invention has a wide selection range for the content of alumina and other heat-resistant inorganic oxides in the alumina-containing coating. Preferably, the heat-resistant inorganic oxide (preferably silicon oxide) is contained in an amount of 2~5wt%, for example, 2wt%, 3wt%, 4wt% or 5wt%, based on the total amount of the modified alumina coating.

According to the present invention, preferably, the alumina-containing coating further comprises a transition metal oxide, wherein the transition metal is at least one of Group IIIB metal elements, Group IVB metal elements and Group VB metal elements. The Group IIIB metal elements include but are not limited to Y and lanthanide series metals. The Group IVB metal elements include but are not limited to Ti and Zr. The Group VB metal elements include but are not limited to V, Nb and Ta.

According to a preferred embodiment of the present invention, the transition metal is more preferably at least one of cerium, lanthanum, zirconium and vanadium.

The invention has a wide selection range for the content of the transition metal oxide. Preferably, the transition metal oxide is contained in an amount of 2~10wt%, based on the total amount of the modified alumina coating.

According to a preferred embodiment of the present invention, the alumina-containing coating comprises alumina, silicon oxide and transition metal oxide. Based on the total amount of the alumina-containing coating, the content of alumina is within the range of 85~93wt%, for example, 85wt%, 86wt%, 87wt%, 88wt%, 89wt%, 90wt%, 91wt%, 92wt% or 93wt%, the content of silicon oxide is within the range of 2~5wt%, such as 2wt%, 3wt%, 4wt% or 5wt%, and the content of transition metal oxide is within the range of 2~10wt%, for example, 2wt%, 3wt%, 4wt%, 5wt%, 6wt%, 7wt%, 8wt%, 9wt% or 10wt%. The preferred embodiment is more conducive to improving the catalytic activity of the catalytic material.

The content of components in the alumina-containing coating can be measured by the ICP testing.

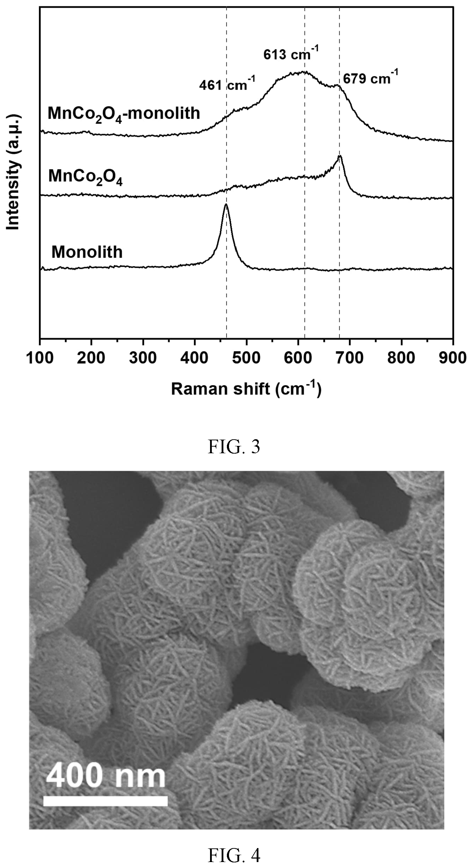

According to a preferred embodiment of the present invention, the manganese-cobalt composite oxide has a morphology of spherical or quasi-spherical particles formed by crossing and stacking a rod-like structure. As shown in FIG. 4, the rod-like structures are irregularly crossed and stacked to form the spherical or quasi-spherical particles.

According to the present invention, preferably, the spherical or quasi-spherical particles have a particle size (also referred to as particle diameter) within the range of 200nm~2µm, more preferably within the range of 200nm~500nm.

According to the present invention, preferably, the rod-like structure has a length within the range of 20~200nm.

In the present invention, the morphology of the manganese-cobalt composite oxide is obtained by scanning electron microscope testing.

According to the present invention, preferably, the surface layer of the rod-like structure is MnO₂, and the interior of the rod-like structure is MnCo₂O₄; further preferably, the MnO₂ surface layer of the rod-like structure has a thickness within the range of 1~3nm.

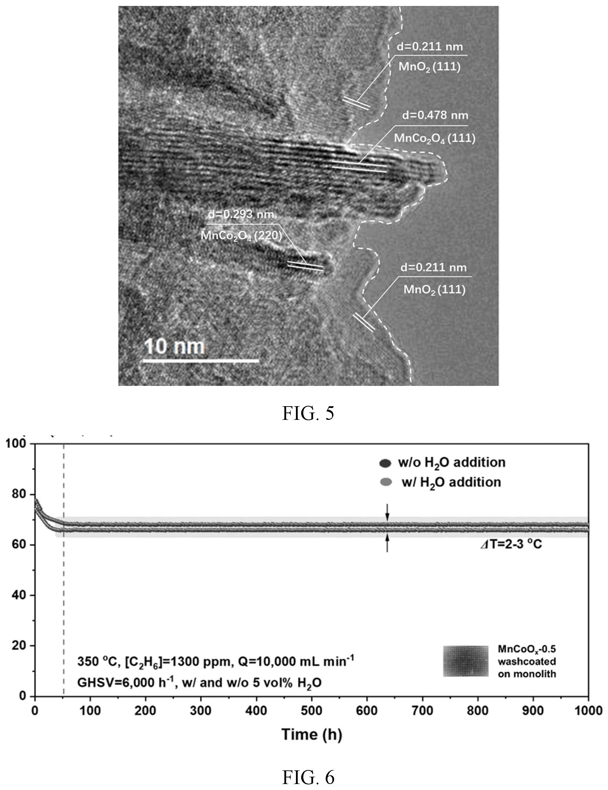

The present invention uses STEM to observe the sample morphology and particle size distribution to statistically analyze the particle size, and uses EDS to observe the sample element distribution. The JEM-F200 field emission transmission electron microscope manufactured by Japan Electron Optics Laboratory (JEOL) is adopted. The operating conditions are as follows: the accelerating voltage is 200kV. Before the test, a small amount of powder sample is ultrasonically dispersed in anhydrous ethanol, and it is dropwise added onto a copper mesh by using a capillary, and tested after drying. As shown in FIG. 5, the strip particles with lattice spacings of 0.478nm and 0.293nm are the (111) and (220) crystal planes of MnCo₂O₄, it is clearly visible that a MnO₂ thin layer with a spacing of 0.211nm is disposed on the outer layer of the (111) and (220) crystal planes, especially the outer layer of the (220) crystal plane. It demonstrates that the surface layer of the rod-like structure is MnO₂, and the interior of the rod-like structure is MnCo₂O₄.

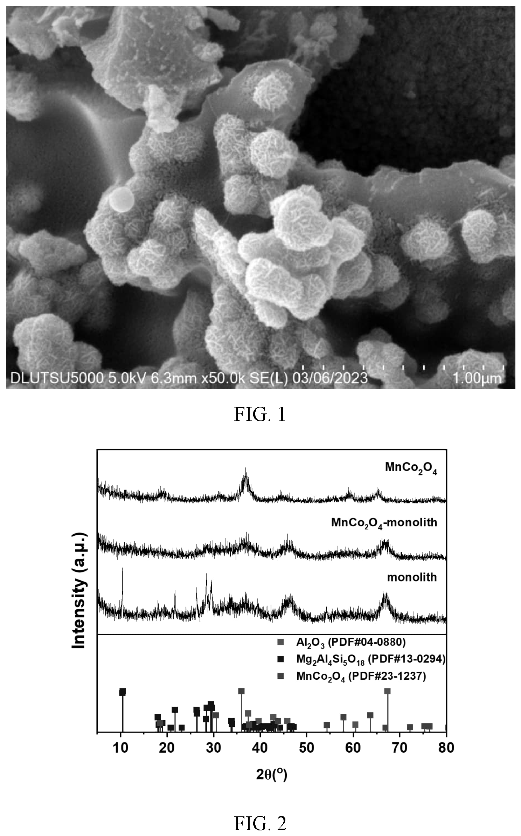

According to the present invention, preferably, the manganese-cobalt composite oxide is grown in the alumina-containing coating. In the preferred embodiment, the manganese-cobalt composite oxide and the alumina-containing coating are tightly combined. As shown in FIG. 1, the manganese-cobalt composite oxide and the alumina-containing coating have a cactus-like morphology (the flocculi grow on the leaves), and there is a bonding phenomenon.

According to a preferred embodiment of the present invention, the Raman spectrum of the modified alumina coating illustrates characteristic peaks at 461cm⁻¹, 613cm⁻¹ and 679cm⁻¹, and the peak intensity of the characteristic peak at 613cm⁻¹ is stronger than the peak intensity of the characteristic peaks at 461cm⁻¹ and 679cm⁻¹. The Raman spectrum of the alumina-containing coating and the manganese-cobalt composite oxide loaded on the surface of the alumina-containing coating shows that the particles of MnCo₂O₄ are obviously bonding with alumina, and the two materials are tightly combined.

In the present invention, the chemical environment where the metals reside is determined by Raman spectroscopy, uses a DRX microscope manufactured by Thermo Fisher Corporation of the USA. Operating conditions are as follows: the excitation wavelength λ_{ex.}=532nm, the detector is CCD, the scanning range is 100-1,000cm⁻¹, and the resolution is 1.0cm⁻¹.

According to the monolithic catalytic material of the invention, the structured support can provide a catalyst bed for a fixed bed reactor. The structured support can be a monolithic carrier block with a hollow pore channel structure formed therein, an alumina-containing coating can be distributed on the inner wall of the pore channel, and the pore channel can be used as a flow space for the fluid. In a case of preferably, the structured support is selected from a monolithic support having a parallel pore structure with openings at both ends. The structured support can be a honeycomb regular carrier (referred to as honeycomb ceramic) with a honeycomb-like opening in the cross section.

Preferably, the structured support is a honeycomb ceramic; further preferably, the structured support is at least one of a cordierite honeycomb support, a mullite honeycomb support, a diamond honeycomb support, a corundum honeycomb support, a zirconium corundum honeycomb support, a quartz honeycomb support, a nepheline honeycomb support, a feldspar honeycomb support, an alumina honeycomb support and a metal alloy honeycomb support.

The second aspect of the present invention provides a preparation method of a monolithic catalytic material, the preparation method comprises the following steps:
(1) introducing a coating slurry containing alumina and/or an alumina precursor into a structured support, then drying and optionally calcining to obtain a structured support loaded with an alumina-containing coating;
(2) subjecting the structured support loaded with an alumina-containing coating to a reaction with a manganese precursor and a cobalt precursor in the presence of a solvent, subsequently drying.

According to the method provided by the invention, the selection range of the structured support may be the same as the selection range of the first aspect described above, and the content will not repeatedly described herein.

According to the present invention, preferably, before step (1), the structured support is pretreated to achieve the purpose that the slurry can be easily adhered, the specific operation and conditions of the pretreatment can be carried out according to conventional technical means in the art. Preferably, the pretreatment is carried out with an acid, particularly preferably nitric acid (the concentration of nitric acid is preferably 0.2~1 mol/L, and the pretreatment time is preferably 4~8 hours). More preferably, the method further comprises: washing and drying the structured support following the pretreatment.

According to the method provided by the present invention, the alumina precursor can be any substance that can be converted into alumina by subsequent calcination, including but not limited to at least one of pseudo-boehmite, aluminum hydroxide and aluminum sec-butoxide.

The invention has no particular limitation on the specific method of introducing the coating slurry into the structured support, and it may be, for example, coating or impregnating, preferably impregnating.

The coating may be performed once or multiple times as long as a desired amount of alumina-containing coating can be obtained.

The impregnation time may be 2~10 minutes.

According to the method provided by the present invention, the coating slurry preferably comprises the components and/or precursors of the components in the alumina~containing coating according to the first aspect mentioned above.

According to a preferred embodiment of the present invention, the coating slurry comprises: alumina and a solvent, and optionally a surfactant, optionally an alumina precursor, and optionally a silicon source. The coating slurry may comprise any one of the surfactant, the alumina precursor, and the silicon source, or may not contain them, but preferably comprise.

Preferably, the content of said solvent is within the range of 40~70wt%, the content of said alumina is within the range of 15~45wt%, the content of said surfactant is within the range of 0~6wt%, the content of said alumina precursor is within the range of 0~6wt%, and the content of said silicon source is within the range of 0~6wt%, based on the total amount of the coating slurry; further preferably, the content of said solvent is within the range of 45~65wt%, the content of said alumina is within the range of 20~40wt%, the content of said surfactant is within the range of 3~6wt%, the content of said alumina precursor is within the range of 3~6wt%, and the content of said silicon source is within the range of 3~6wt%, based on the total amount of the coating slurry. The use of the preferred coating slurry formula is more conducive to the reaction of step (2), can form a stronger interaction between the active centers and the coating, and effectively reduce the agglomeration and inactivation of the active ingredients during the reaction process.

According to the present invention, preferably, the alumina precursor is pseudo-boehmite. More preferably, the pseudo-boehmite has a specific surface area within the range of 150~380m²/g.

According to the present invention, preferably, the alumina has a specific surface area within the range of 100~1,000m²/g.

The alumina and pseudo~boehmite may be commercially available products or the products prepared according to the prior art.

In the present invention, the surfactant can be selected from a wide range of types, as long as the purpose of uniform dispersion of the slurry components can be achieved. Preferably, the surfactant is at least one of polyethylene glycol, urea, sodium dodecylbenzene sulfonate and stearic acid.

According to a preferred embodiment of the present invention, the silicon source is an organic silicon source, further preferably at least one of ethyl orthosilicate, methyl orthosilicate, polysiloxane and ethoxysiloxane.

In the present invention, the type of the solvent can be selected from a wide range, as long as it can provide an environment for mixing other components in the slurry. Preferably, the solvent is water and/or low-carbon alcohol, more preferably water and low-carbon alcohol. The low-carbon alcohol may be C1-C5 alcohol, preferably one or more selected from the group consisting of ethanol, ethylene glycol and butanol. Preferably, the mass ratio of low-carbon alcohol to water is (1~2):20.

According to the present invention, preferably, the pH value of the coating slurry is within the range of 3~4, and/or, the viscosity of the coating slurry is within the range of 10~100 mPa·s.

According to the invention, the pH value of said coating slurry can be adjusted by adding an acid or an alkali, preferably by adding an inorganic acid solution, for example, at least one of nitric acid, sulfuric acid and hydrochloric acid.

In the present invention, there is no particular limitation on the used amount of the inorganic acid solution, as long as the pH value of the coating slurry is within the range of 3~4, those skilled in the art can select the used amount according to actual needs. In the present invention, the sum of the used amount of the inorganic acid solution and the total amount of the contents of other components in the coating slurry reaches 100%.

In the present invention, the viscosity of the coating slurry refers to the viscosity measured by a viscometer at a temperature of 25°C.

The use of a coating slurry formulation according to the above preferred embodiment is more conducive to the close bonding of the manganese-cobalt composite oxide and the coating, and is more conducive to improving the subsequent performance in the catalytic oxidation reaction.

According to the present invention, preferably, the coating slurry further comprises a transition metal, wherein the transition metal is at least one of Group IIIB metal elements, Group IVB metal elements and Group VB metal elements. The specific type selection range of the transition metal can be the same as that described in the first aspect above, and the content will not be repeatedly described herein.

The present invention has no particular limitation on the method of introducing the transition metal into the coating slurry, as long as the transition metal can be introduced into the alumina-containing coating. Preferably, the transition metal can be added into the coating slurry in the form of a transition metal salt, mixed with other components, or introduced by being loaded on alumina.

According to the present invention, preferably, the coating slurry further comprises a transition metal salt, more preferably, the transition metal salt is contained in an amount of 1~5wt%, based on the total amount of the coating slurry.

According to a specific embodiment of the invention, the preparation method of the coating slurry comprises: mixing alumina powder, pseudo-boehmite, a surfactant, a silicon source and a solvent uniformly, and then adjusting the pH value to 3~4 or the viscosity to 10~100 mPa·s. The pH is generally adjusted with a diluted inorganic acid solution to obtain a slurry with a suitable viscosity.

According to the present invention, preferably, the reaction in step (2) is a redox reaction, the reaction produces a manganese-cobalt composite oxide on the surface of the alumina-containing coating, the alumina-containing coating and the manganese-cobalt composite oxide form a modified alumina coating.

Preferably, the modified alumina coating has a thickness within the range of 20~50µm.

According to the present invention, preferably, the coating slurry, the structured support, the manganese precursor and the cobalt precursor are used in such an amount that in the prepared monolithic catalytic material, the content of the structured support is within the range of 80~95wt%, more preferably within the range of 85~92wt%, and the total content of the modified alumina coating is within the range of 5~20wt%, more preferably within the range of 8~15wt%, based on the total amount of the monolithic catalytic material.

Preferably, the coating slurry, the structured support, the manganese precursor and the cobalt precursor are used in such an amount that in the prepared monolithic catalytic material, the content of the structured support is within the range of 85~95wt%, and the total content of the modified alumina coating is within the range of 5~15wt%, based on the total amount of the monolithic catalytic material.

Preferably, the manganese precursor and the cobalt precursor are used in such an amount that in the prepared monolithic catalytic material, a part of Mn and Co calculated in terms of MnCo₂O₄ is contained in an amount of 5~15wt%, and the remaining part of Mn calculated in terms of MnO₂ is contained in an amount of 0.1~1wt%, based on the total amount of the modified alumina coating. The content of a part of Mn and Co calculated in terms of MnCo₂O₄ and the content of the remaining part of Mn calculated in terms of MnO₂ have the same meaning as those described in the first aspect mentioned above.

According to the method provided by the present invention, the manganese precursor can be any manganese-containing compound that can undergo a redox reaction. Preferably, the manganese precursor is potassium permanganate.

Similarly, the cobalt precursor may be any cobalt-containing compound that can undergo a redox reaction. Preferably, the cobalt precursor is a divalent cobalt salt, such as cobalt nitrate, cobalt chloride, or cobalt sulfate. In the embodiment of the present invention, cobalt nitrate is used as an example for providing the illustrative description.

The present invention has a wide selection range for the solvent in step (2), as long as the solvent provides an environment for the reaction. Preferably, the solvent is water.

According to a preferred embodiment of the present invention, the reaction in step (2) comprises: contacting a structured support loaded with an alumina-contained coating with a solution containing a manganese precursor, and then adding a cobalt precursor to carry out the reaction. An use of the preferred embodiment is more conducive to the redox reaction and further facilitates the production of catalytic materials with improved performance.

According to the method provided by the present invention, preferably, the concentration of the solution containing the manganese precursor is within the range of 0. 1~0.3 mol/L.

According to the method provided by the present invention, preferably, the mode of contacting a structured support loaded with an alumina-contained coating with a solution containing a manganese precursor in step (2) is impregnating the structured support loaded with an alumina-contained coating in the solution containing a manganese precursor.

Preferably, the cobalt precursor is added in the form of a solution containing the cobalt precursor.

In a case of preferably, the concentration of the solution containing the cobalt precursor is 1~8 times the concentration of the solution containing the manganese precursor.

According to the method provided by the present invention, the addition rate of the solution containing the cobalt precursor can be selected from a wide range, as long as it facilitates the redox reaction. Preferably, the addition rate of the solution containing the cobalt precursor is 0.5%~1% of the total volume of the solution containing the cobalt precursor per minute.

According to a preferred embodiment of the present invention, step (2) comprises: contacting a structured support loaded with an alumina-contained coating with a solution containing a manganese precursor, and then heating to the reaction temperature, subsequently adding a cobalt precursor to carry out the reaction; preferably, the reaction temperature is within the range of 50~90°C, more preferably within the range of 60~80°C; preferably, the reaction time is within the range of 1~6 hours, more preferably within the range of 2~4 hours. The start reaction time is measured upon completion of the addition process of the cobalt precursor.

According to a preferred embodiment of the present invention, in order to further facilitate the redox reaction, the step of adding the cobalt precursor in step (2) is carried out under the oscillation conditions. The present invention has a wide range of oscillation conditions, and preferably, the oscillation frequency is within the range of 60~180 times/minute.

Specifically, the method provided by the invention further comprises a washing step performed before the drying in step (2). The washing can be performed by conventional technical means in the art, and the invention does not impose particular limitation thereon.

According to the present invention, preferably, the drying conditions in step (1) and step (2) independently comprise: a temperature of 100~150°C and a time of 8~24 hours.

According to the present invention, the calcination may or may not be performed in step (1). Preferably, the calcination conditions in step (1) comprises: a calcination temperature of 250~500°C, more preferably 300~380°C, and a calcination time of 1~6 hours, more preferably 2~4 hours.

The third aspect of the present invention provides a monolithic catalyst, comprising the monolithic catalytic material according to the first aspect or the monolithic catalytic material produced with the preparation method according to the second aspect, and a precious metal component.

Preferably, the precious metal component is at least one of platinum, palladium, rubidium and rhodium, more preferably platinum and/or palladium, most preferably platinum and palladium. The present invention has a wide selection range for the ratio of platinum and palladium, for example, 1: 0.1~10.

According to the present invention, the content of the precious metal component is 0.2~2.5 g/L, based on the total volume of the monolithic catalyst. An use of the monolithic catalytic material provided by the present invention can reduce dosage of the precious metal component.

According to the present invention, preferably, the precious metal component has an average particle diameter within the range of 4~10nm, more preferably within the range of 4~8nm, such as 4nm, 5nm, 6nm, 7nm or 8nm. The precious metal component of the catalyst provided by the present invention has a better dispersed and a smaller average particle diameter.

In the present invention, the average particle diameter of the precious metal component is measured by using STEM to observe the sample morphology and particle size distribution to statistically analyze the particle size, the JEM~F200 field emission transmission electron microscope manufactured by Japan Electron Optics Laboratory (JEOL) is adopted. The operating conditions are as follows: the accelerating voltage is 200kV. Before the test, a small amount of powder sample is ultrasonically dispersed in anhydrous ethanol, and it is dropwise added onto a copper mesh by using a capillary, and tested after drying.

The invention has no particular limitation on the preparation method of the monolithic catalyst, and the preparation method may be any method conventionally used in the field, such as an ammonia decomposition method.

The fourth aspect of the present invention provides a method for preparing a monolithic catalyst, the method comprising: impregnating the monolithic catalytic material according to the first aspect or the monolithic catalytic material produced with the preparation method according to the second aspect in an impregnation liquid containing a noble metal precursor, adjusting the pH to alkalinity, standing still, and then drying and calcining.

Preferably, the time of standing still is within the range of 1~6 hours.

Preferably, the preparation method further comprises: subjecting the product obtained after standing still to a heating treatment.

Preferably, the conditions of the heating treatment comprise: a temperature of 50~80°C, more preferably 60~70°C, and a time of 1~6 hours

Preferably, the drying conditions comprise: a temperature of 100~150°C and a time of 12~24 hours.

Preferably, the calcination conditions comprise: a calcination temperature of 400~550°C, and a calcination time of 1~6 hours, more preferably 2~4 hours.

In the present invention, ammonia water can be used to adjust the pH to alkalinity, preferably adjust the pH to the range of 8~9. Preferably, the concentration of ammonia water is within the range of 0.5~1 mol/L. Using ammonia water to adjust the pH is conducive to the dispersion of precious metals and improving the catalytic performance of the catalyst.

The fifth aspect of the present invention provides a use of the monolithic catalytic material according to the first aspect or the monolithic catalyst according to the third aspect in a catalytic oxidation reaction, preferably in a catalytic oxidation reaction of VOCs. The monolithic catalytic material or monolithic catalyst provided by the present invention is suitable for treating a variety of industrial waste gases, and particularly suitable for the treatment of VOCs materials contained in waste gases from the petroleum refining and chemical industries.

The sixth aspect of the present invention provides a method for catalytic oxidation of VOCs, the method comprises: contacting exhaust gas containing VOCs with the monolithic catalyst according to the third aspect to carry out a catalytic oxidation reaction.

Preferably, the conditions of the catalytic oxidation reaction comprise: the reaction pressure is normal pressure, the reaction temperature is within the range of 200~600°C, and the exhaust gas containing VOCs has a hourly space velocity within the range of 5,000~60,000 h⁻¹.

Preferably, the concentration of VOCs in the exhaust gas containing VOCs is within the range of 500~10,000 ppmv.

The invention has a wide range of selection for the types of the VOCs substances, which may be one or more substances selected from alkanes, olefins, benzene series, oxygen-containing VOCs and chlorine-containing VOCs.

In the present invention, the reaction may be carried out in a fixed bed reactor.

The preparation process and product performance of the method of the present invention are further illustrated below with reference to examples and comparative examples, but the following examples do not constitute a limitation to the method of the present invention.

The pseudo-boehmite used in the following examples was SB powder with a specific surface area of 350m²/g., the alumina powder was derived from SB powder calcined at 540°C, with a specific surface area of 300m²/g; the honeycomb ceramic used in the examples was 400~mesh cordierite honeycomb ceramic, the honeycomb ceramic was pretreated before use. The pretreatment process was as follows: 100 mL of the honeycomb ceramic was put into 200 mL of nitric acid solution with a concentration of 1mol/L, and oscillated in an ultrasonic oscillator for 1 hour; then repeatedly rinsed with 500 mL of clean water, and then subjected to drying in an oven at 110°C for 12 hours.

### Example 1

(1) Cerium nitrate aqueous solution with a concentration of 3wt%, alumina powder, urea, pseudo-boehmite, butanol and tetraethyl orthosilicate were mixed and stirred uniformly according to the mass ratio (170:90:10:10:18:10) of the materials to obtain a mixed slurry; the pH was adjusted to 3.5;
(2) the pretreated honeycomb ceramic was impregnated in the mixed slurry for 2 minutes, the honeycomb ceramic was taken out, with the slurry residue blew out of the pores, the honeycomb ceramic was subjected to drying at 110°C for 12 hours and calcining at 350°C for 4 hours, a monolithic catalyst support was obtained;
(3) the monolithic catalyst support obtained in step (2) was impregnated in 100 mL of potassium permanganate solution with a concentration of 0.2mol/L, then heated to 70°C, 50mL of cobalt nitrate solution with a concentration of 0.8mol/L was dropwise added, during the process, a beaker oscillator was used to oscillate at a frequency of 60 times/min. After that, standing still was kept for 4 hours, the monolithic catalyst support was taken out, purged with dry air for 2 hours, and then subjected to drying at 110°C for 8 hours, the monolithic catalytic material A was obtained.

The monolithic catalytic material A included a honeycomb ceramic and a modified alumina coating (comprising an alumina-containing coating and a manganese-cobalt composite oxide) distributed on the honeycomb ceramic. Based on the total amount of the catalytic material, the content of the honeycomb ceramic was 88wt%, and the content of the modified alumina coating was 12wt%. Wherein the modified alumina coating had a specific surface area of 150m²/g and an average pore size of 7.8nm.

Based on the total amount of the modified alumina coating, the content of a part of Mn calculated in terms of MnO₂ was 0.2wt%, the content of a part of Mn and Co calculated in terms of MnCo₂O₄ was 10wt%, the content of Si calculated in terms of SiO₂ was 2wt%, the content of Al calculated in terms of Al₂O₃ was 85wt%, and the content of Ce calculated in terms of CeO₂ was 3wt%.

After characterization, as illustrated in FIG. 1, FIG. 4 and FIG. 5, the surface of the coating was uniformly loaded with spherical particles of manganese-cobalt composite oxide, the diameter of the spherical particles was within the range of 200nm~500nm, the length of the rod-like structure on the surface of the spherical particles was within the range of 20nm~40nm, the inside of the rod-like structure was MnCo₂O₄, the outer layer was MnO₂, MnO₂ had a thickness within the range of 1~3nm, and the modified alumina coating had a thickness within the range of 25µm~30µm; FIG. 1 illustrated a SEM photograph of the monolithic catalytic material A, as can be seen, the manganese-cobalt composite oxide and the coating were tightly combined, the manganese-cobalt composite oxide and the coating had a cactus-like morphology, and there was a bonding phenomenon.

FIG. 2 illustrated an XRD spectrogram of the monolithic catalytic material A. FIG. 2 illustrated that after MnCo₂O₄ was combined with alumina, the diffraction peaks of the two compounds were weakened, it indicated that there was a certain degree of combination between the two compounds.

FIG. 3 illustrated the Raman spectrogram of the monolithic catalytic material A. As can be seen, there were characteristic peaks at 461cm⁻¹, 613cm⁻¹ and 679cm⁻¹, and the peak intensity of the characteristic peak at 613cm⁻¹ was stronger than the peak intensity of the characteristic peaks at 461cm⁻¹ and 679cm⁻¹. The particles of MnCo₂O₄ were obviously bonded with alumina, and the two compounds were closely bonded.

FIG. 4 illustrated the SEM photograph of the monolithic catalytic material A. FIG. 4 showed that the manganese-cobalt composite oxide had a morphology of spherical or quasi-spherical particles formed by crossing and stacking a rod-like structure.

FIG. 5 illustrated a STEM photograph of the monolithic catalytic material A. The strip particles with lattice spacings of 0.478nm and 0.293nm were the (111) and (220) crystal planes of MnCo₂O₄, it was clearly visible that a MnO₂ thin layer with a spacing of 0.211nm was disposed on the outer layer of the (111) and (220) crystal planes, especially the outer layer of the (220) crystal plane. It demonstrated that the surface layer of the rod-like structure was MnO₂, and the interior of the rod-like structure was MnCo₂O₄.

(4) The monolithic catalytic material A obtained in step (3) was impregnated in 100 mL of platinum nitrate solution with a concentration of 0.66g/L and palladium nitrate solution with a concentration of 0.33g/L, concentrated ammonia was added to adjust the pH to 8~9, and then subjected to standing still for 2 hours, subsequently heated at a temperature of 70°C for 1 hour;

(5) the honeycomb ceramic catalyst in step (4) was taken out, and purged with dry air for 2 hours, then subjected to drying at 110°C for 12 hours and calcining at 450°C for 4 hours, a catalyst MnCo-1 was prepared.

### Example 2

(1) Cerium nitrate aqueous solution with a concentration of 5wt%, alumina powder, urea, pseudo-boehmite, butanol and tetraethyl orthosilicate were mixed and stirred uniformly according to the mass ratio (170:90:10:10:18:12) of the materials to obtain a mixed slurry; the pH was adjusted to 3;
(2) the pretreated honeycomb ceramic was impregnated in the mixed slurry for 2 minutes, the honeycomb ceramic was taken out, with the slurry residue blew out of the pores, the honeycomb ceramic was subjected to drying at 110°C for 15 hours and calcining at 360°C for 2 hours, a monolithic catalyst support was obtained;
(3) the monolithic catalyst support obtained in step (2) was impregnated in 100 mL of potassium permanganate solution with a concentration of 0.2mol/L, then heated to 70°C, 50mL of cobalt nitrate solution with a concentration of 1mol/L was dropwise added, during the process, a beaker oscillator was used to oscillate at a frequency of 60 times/min. After that, standing still was kept for 4 hours, the monolithic catalyst support was taken out, purged with dry air for 2 hours, and then subjected to drying at 110°C for 12 hours, the monolithic catalytic material B was obtained.

The monolithic catalytic material B included a honeycomb ceramic and a modified alumina coating (comprising an alumina-containing coating and a manganese-cobalt composite oxide) distributed on the honeycomb ceramic. Based on the total amount of the catalytic material, the content of the honeycomb ceramic was 85wt%, and the content of the modified alumina coating was 15wt%. Wherein the modified alumina coating had a specific surface area of 170m²/g and an average pore size of 7.3nm.

Based on the total amount of the modified alumina coating, the content of a part of Mn calculated in terms of MnO₂ was 0.2wt%, the content of a part of Mn and Co calculated in terms of MnCo₂O₄ was 11wt%, the content of Si calculated in terms of SiO₂ was 2.4wt%, the content of Al calculated in terms of Al₂O₃ was 81.4wt%, and the content of Ce calculated in terms of CeO₂ was 5wt%.

(4) The monolithic catalytic material B obtained in step (3) was impregnated in 100 mL of platinum nitrate solution with a concentration of 0.66g/L and palladium nitrate solution with a concentration of 0.33g/L, concentrated ammonia was added to adjust the pH to 8~9, and then subjected to standing still for 2 hours, subsequently heated at a temperature of 75°C for 1.5 hours;

(5) the honeycomb ceramic catalyst in step (4) was taken out, and purged with dry air for 2 hours, then subjected to drying at 110°C for 12 hours and calcining at 450°C for 4 hours, a catalyst MnCo-2 was prepared.

### Example 3

Steps (1) and (2) were carried out according to Example 1.

(3) The monolithic catalyst support obtained in step (2) was impregnated in 100 mL of potassium permanganate solution with a concentration of 0.2mol/L, then heated to 70°C, and 50mL of cobalt nitrate solution with a concentration of 0.6mol/L was dropwise added, during the process, a beaker oscillator was used to oscillate at a frequency of 60 times/min. After that, standing still was kept for 4 hours, the monolithic catalyst support was taken out, purged with dry air for 2 hours, and then subjected to drying at 110°C for 8 hours, the monolithic catalytic material C was obtained.

The monolithic catalytic material C included a honeycomb ceramic and a modified alumina coating (comprising an alumina-containing coating and a manganese-cobalt composite oxide) distributed on the honeycomb ceramic. Based on the total amount of the catalytic material, the content of the honeycomb ceramic was 89wt%, and the content of the modified alumina coating was 11wt%.

Based on the total amount of the modified alumina coating, the content of a part of Mn calculated in terms of MnO₂ was 0.1wt%, the content of a part of Mn and Co calculated in terms of MnCo₂O₄ was 5wt%, the content of Si calculated in terms of SiO₂ was 2wt%, the content of Al calculated in terms of Al₂O₃ was 90wt%, and the content of Ce calculated in terms of CeO₂ was 3wt%.

SEM and STEM characterizations showed that the surface of the coating was uniformly loaded with spherical particles of manganese-cobalt composite oxide, the diameter of the spherical particles was within the range of 200nm~500nm, the length of the rod-like structure on the surface of the spherical particles was within the range of 20nm~40nm, the inside of the rod-like structure was MnCo₂O₄, the outer layer was MnO₂, MnO₂ had a thickness within the range of 1~2nm, and the modified alumina coating had a thickness within the range of 25µm~30µm.

(4) The monolithic catalytic material C obtained in step (3) was impregnated in 100 mL of platinum nitrate solution with a concentration of 1g/L, concentrated ammonia was added to adjust the pH to 8~9, and then subjected to standing still for 2 hours, subsequently heated at a temperature of 70°C for 1 hour;

(5) the honeycomb ceramic catalyst in step (4) was taken out, and purged with dry air for 2 hours, then subjected to drying at 110°C for 12 hours and calcining at 450°C for 4 hours, a catalyst MnCo-3 was prepared.

### Example 4

According to the method of Example 1, except that the cerium nitrate aqueous solution was replaced with an equal mass of water. The catalyst MnCo-4 was prepared.

### Example 5

According to the method of Example 1, except that 100mL of potassium permanganate solution was replaced with 100mL of manganese nitrate solution. The catalyst MnCo-5 was prepared.

The obtained catalyst cannot be loaded with a large amount of Mn and Co elements by chemical reduction. Only a small amount of Mn and Co in the form of MnO₂ and Co₃O₄ were loaded on the catalyst respectively. Based on the total amount of the modified alumina coating, the content of Mn calculated in terms of MnO₂ was 0.1wt%, the content of Co calculated in terms of Co₃O₄ was 0.2wt%, the content of Si calculated in terms of SiO₂ was 2wt%, the content of Al calculated in terms of Al₂O₃ was 95wt%, and the content of Ce calculated in terms of CeO₂ was 3wt%.

### Example 6

According to the method of Example 1, except that ethyl orthosilicate was not added in step (1), a catalyst MnCo-6 was prepared.

### Example 7

According to the method of Example 1, except that cerium nitrate aqueous solution with a concentration of 3wt%, alumina powder, urea, pseudo-boehmite, butanol and tetraethyl orthosilicate were mixed and stirred uniformly according to the mass ratio 170:90:10:10:18:60 of the materials, a catalyst MnCo-7 was prepared.

### Example 8

According to the method of Example 1, except that in step (3), potassium permanganate solution and cobalt nitrate solution were added simultaneously, and reacted in an autoclave under the conditions of a temperature of 160°C and a pressure of 1MPa, a catalyst MnCo-8 was prepared.

The SEM characterization showed that the coating surface was loaded with spherical particles of manganese-cobalt composite oxide, the diameter of the spherical particles was within the range of 2µm~5µm, and the rod-like structure on the surface of the spherical particles was not obvious, and the thickness of the modified alumina coating was 10µm, there was obvious loss.

### Example 9

According to the method of Example 1, except that ethyl orthosilicate was replaced with an equal mass of silica sol based on an equal mass of silica, a catalyst MnCo-9 was prepared.

### Example 10

According to the method of Example 1, except that step (4) and step (5) were not included, and after drying process in step (3), a calcination was performed at 450°C for 4 hours, a catalyst MnCo-10 was prepared.

### Comparative Example 1

According to the method of Example 1, except that steps (1) and (2) were not included, and the honeycomb ceramic body was directly used as a support for performing the subsequent steps.

**Table 1**

| Catalysts | Mass fraction of Mn, wt% | Precious metal content, g/L | Average particle diameter of precious metal, nm |
|---|---|---|---|
| MnCo-1 | 0.28 | 1.6 | 5.0 |
| MnCo-2 | 0.27 | 1.6 | 5.1 |
| MnCo-3 | 0.14 | 1.6 | 5.2 |
| MnCo-4 | 0.28 | 1.6 | 5.3 |
| MnCo-5 | 0.015 | 1.6 | 6.8 |
| MnCo-6 | 0.27 | 1.6 | 5.6 |
| MnCo-7 | 0.25 | 1.6 | 7.2 |
| MnCo-8 | 0.04 | 1.6 | 15.2 |
| MnCo-9 | 0.27 | 1.6 | 5.2 |
| MnCo-10 | 0.28 | 0 | - |
| Comparative Example | 0.08 | 0.3 | 50 |

| | | | |
|---|---|---|---|
| Note: the mass fraction of Mn in Table 1 is calculated based on the total amount of the whole catalyst. | | | |

### Test Example 1

The catalysts prepared in Examples and Comparative Examples were applied in the ethane catalytic oxidation reaction, and the reaction was carried out in a fixed bed reactor of a medium-sized reaction evaluation device. The catalyst loading amount was 100mL, the bed height was 10cm, the initial concentration of ethane was 2,000 ppm, the carrier gas was air, and the space velocity was 20,000h⁻¹. The ethane concentration was measured by using the Agilent 7890A gas chromatograph, and the test results were shown in Table 2. Benzene was used as a reactant under the same conditions, and the initial concentration of benzene was 3,000 ppm, the test results were shown in Table 3.

**Table 2**

| Catalysts | Temperature with an ethane conversion rate of 50% | Temperature with an ethane conversion rate of 70% | Temperature with an ethane conversion rate of 90% |
|---|---|---|---|
| MnCo-1 | 366°C | 390°C | 410°C |
| MnCo-2 | 362°C | 386°C | 406°C |
| MnCo-3 | 372°C | 395°C | 415°C |
| MnCo-4 | 385°C | 410°C | 430°C |
| MnCo-5 | 405°C | 430°C | 460°C |
| MnCo-6 | 375°C | 400°C | 420°C |
| MnCo-7 | 400°C | 425°C | 450°C |
| MnCo-8 | 430°C | 457°C | 480°C |
| MnCo-9 | 372°C | 397°C | 415°C |
| MnCo-10 | 415°C | 440°C | 470°C |
| Comparative Example 1 | 650°C | - | - |

**Table 3**

| Catalysts | Temperature with a benzene conversion rate of 50% | Temperature with a benzene conversion rate of 70% | Temperature with a benzene conversion rate of 90% |
|---|---|---|---|
| MnCo-1 | 176°C | 190°C | 215°C |
| MnCo-2 | 172°C | 187°C | 212°C |
| MnCo-3 | 180°C | 196°C | 220°C |
| MnCo-4 | 190°C | 210°C | 235°C |
| MnCo-5 | 210°C | 230°C | 250°C |
| MnCo-6 | 183°C | 201°C | 225°C |
| MnCo-7 | 200°C | 220°C | 240°C |
| MnCo-8 | 230°C | 255°C | 270°C |
| MnCo-9 | 180°C | 198°C | 223°C |
| MnCo-10 | 280°C | 320°C | 380°C |
| Comparative Example 1 | 500°C | 600°C | - |

### Test Example 2

The test example served to illustrate the stability of the monolithic catalytic material A prepared in Example 1. The test conditions included: the loading amount of the monolithic catalytic material A was 100 mL, the reaction temperature was 350°C, the gas hourly space velocity (GHSV) was 6,000h⁻¹, the ethane concentration was 1,300ppm, and the carrier gas was air. FIG. 6 illustrated a stability evaluation curve of the monolithic catalytic material A in Example 1, wherein the horizontal coordinate was the reaction time, and the vertical coordinate was the conversion rate of ethane. Among them, the black (lower) curve was the curve obtained under the condition of introducing 5vol% of water vapor (w/H₂O addition), and the red (upper) curve was the curve obtained under the condition without introducing water vapor (w/o H₂O addition). As can be seen, the catalytic material entered a stable state following 50 hours after start of the reaction. Whether the water vapor was introduced or not, the catalytic material activity did not decrease, indicated that the catalytic materials provided by the present invention had desirable stability.

## Claims

1. A monolithic catalytic material, is **characterized in that** the monolithic catalytic material comprises a structured support and a modified alumina coating distributed on the structured support, the modified alumina coating comprises an alumina-containing coating and a manganese-cobalt composite oxide supported on the surface of the alumina-containing coating.

2. The catalytic material according to claim 1, wherein the structured support is contained in an amount of 80~95wt%, preferably 85~92wt%, and the modified alumina coating is contained in an amount of 5~20wt%, preferably 8~15wt%, based on the total amount of the monolithic catalytic material;
preferably, the alumina-containing coating is contained in an amount of 85~95wt%, and the manganese-cobalt composite oxide is contained in an amount of 5~15wt%, based on the total amount of the modified alumina coating;
further preferably, a part of Mn and Co calculated in terms of MnCo₂O₄ is contained in an amount of 4~15wt%, and the remaining part of Mn calculated in terms of MnO₂ is contained in an amount of 0.1~1wt%, based on the total amount of the modified alumina coating;
further preferably, the modified alumina coating has a thickness within the range of 20~50µm;
further preferably, the modified alumina coating has a specific surface area within the range of 100~200m²/g, and an average pore size within the range of 5~12nm.

3. The catalytic material according to claims 1 or 2, wherein the alumina-containing coating further comprises a heat-resistant inorganic oxide, which is at least one of silicon oxide, titanium oxide, cerium oxide, lanthanum oxide and zirconium oxide, preferably silicon oxide;
preferably, the heat-resistant inorganic oxide is contained in an amount of 2~5wt%, based on the total amount of the modified alumina coating;
preferably, the alumina-containing coating further comprises a transition metal oxide, wherein the transition metal is at least one of Group IIIB metal elements, Group IVB metal elements and Group VB metal elements, more preferably at least one of cerium, lanthanum, zirconium and vanadium;
preferably, the transition metal oxide is contained in an amount of 2~10wt%, based on the total amount of the modified alumina coating.

4. The catalytic material according to any one of claims 1-3, wherein the manganese-cobalt composite oxide has a morphology of spherical or quasi-spherical particles formed by crossing and stacking a rod-like structure;
preferably, the spherical or quasi-spherical particles have a particle size within the range of 200nm~2µm, more preferably within the range of 200nm~500nm.

5. The catalytic material according to claim 4, wherein the rod-like structure has a length within the range of 20~200nm;
preferably, the surface layer of the rod-like structure is MnO₂, and the interior of the rod-like structure is MnCo₂O₄;
further preferably, the MnO₂ surface layer of the rod-like structure has a thickness within the range of 1~3nm.

6. The catalytic material according to any one of claims 1-5, wherein the manganese-cobalt composite oxide is grown in the alumina-containing coating.

7. The catalytic material according to any one of claims 1-6, wherein the Raman spectrum of the modified alumina coating illustrates characteristic peaks at 461cm⁻¹, 613cm⁻¹ and 679cm⁻¹, and the peak intensity of the characteristic peak at 613cm⁻¹ is stronger than the peak intensity of the characteristic peaks at 461cm⁻¹ and 679cm⁻¹.

8. The catalytic material according to any one of claims 1-7, wherein the structured support is selected from a monolithic support having a parallel pore structure with openings at both ends;
preferably, the structured support is a honeycomb ceramic;
preferably, the structured support is at least one of a cordierite honeycomb support, a mullite honeycomb support, a diamond honeycomb support, a corundum honeycomb support, a zirconium corundum honeycomb support, a quartz honeycomb support, a nepheline honeycomb support, a feldspar honeycomb support, an alumina honeycomb support and a metal alloy honeycomb support.

9. A preparation method of a monolithic catalytic material, is **characterized in that** the preparation method comprises the following steps:
(1) introducing a coating slurry containing alumina and/or an alumina precursor into a structured support, then drying and optionally calcining to obtain a structured support loaded with an alumina-containing coating;
(2) subjecting the structured support loaded with an alumina-containing coating to a reaction with a manganese precursor and a cobalt precursor in the presence of a solvent, subsequently drying.

10. The preparation method according to claim 9, wherein the reaction in step (2) is a redox reaction, the reaction produces a manganese-cobalt composite oxide on the surface of the alumina-containing coating, the alumina-containing coating and the manganese-cobalt composite oxide form a modified alumina coating;
preferably, the modified alumina coating has a thickness within the range of 20~50µm;
preferably, the coating slurry, the structured support, the manganese precursor and the cobalt precursor are used in such an amount that in the prepared monolithic catalytic material, the content of the structured support is within the range of 80~95wt%, more preferably within the range of 85~92wt%, and the total content of the modified alumina coating is within the range of 5~20wt%, more preferably within the range of 8~15wt%, based on the total amount of the monolithic catalytic material; preferably, the manganese precursor and the cobalt precursor are used in such an amount that in the prepared monolithic catalytic material, a part of Mn and Co calculated in terms of MnCo₂O₄ is contained in an amount of 5~15wt%, and the remaining part of Mn calculated in terms of MnO₂ is contained in an amount of 0.1~1wt%, based on the total amount of the modified alumina coating;
preferably, the molar ratio of the Mn precursor calculated in terms of metal elements to the cobalt precursor calculated in terms of metal elements in step (2) is within the range of 0. 1~0.8, more preferably within the range of 0.3~0.6;
preferably, the structured support is selected from a monolithic support having a parallel pore structure with openings at both ends; further preferably, the structured support is a honeycomb ceramic; further preferably, the structured support is at least one of a cordierite honeycomb support, a mullite honeycomb support, a diamond honeycomb support, a corundum honeycomb support, a zirconium corundum honeycomb support, a quartz honeycomb support, a nepheline honeycomb support, a feldspar honeycomb support, an alumina honeycomb support and a metal alloy honeycomb support.

11. The preparation method according to claim 9 or 10, wherein the coating slurry comprises: alumina and a solvent, and optionally a surfactant, optionally an alumina precursor, and optionally a silicon source;
preferably, the content of said solvent is within the range of 40~70wt%, the content of said alumina is within the range of 15~45wt%, the content of said surfactant is within the range of 0~6wt%, the content of said alumina precursor is within the range of 0~6wt%, and the content of said silicon source is within the range of 0~6wt%, based on the total amount of the coating slurry; further preferably, the content of said solvent is within the range of 45~65wt%, the content of said alumina is within the range of 20~40wt%, the content of said surfactant is within the range of 3~6wt%, the content of said alumina precursor is within the range of 3~6wt%, and the content of said silicon source is within the range of 3~6wt%, based on the total amount of the coating slurry;
preferably, the alumina precursor is at least one of pseudo-boehmite, aluminum hydroxide and aluminum sec-butoxide;
preferably, the alumina has a specific surface area within the range of 100~1,000m²/g;
preferably, the pseudo-boehmite has a specific surface area within the range of 150~380m²/g;
preferably, the surfactant is at least one of polyethylene glycol, urea, sodium dodecylbenzene sulfonate and stearic acid;
preferably, the silicon source is an organic silicon source, more preferably at least one of ethyl orthosilicate, methyl orthosilicate, polysiloxane and ethoxysiloxane;
preferably, the pH value of the coating slurry is within the range of 3~4, and/or, the viscosity of the coating slurry is within the range of 10~100 mPa·s.

12. The preparation method according to claim 11, wherein the coating slurry further comprises a transition metal salt, wherein the transition metal is at least one of Group IIIB metal elements, Group IVB metal elements and Group VB metal elements, preferably at least one of cerium, lanthanum, zirconium and vanadium;
preferably, the transition metal salt is contained in an amount of 1~5wt%, based on the total amount of the coating slurry.

13. The preparation method according to any one of claims 9-12, wherein the manganese precursor is potassium permanganate;
the cobalt precursor is a divalent cobalt salt;
preferably, the reaction in step (2) comprises: contacting a structured support loaded with an alumina-contained coating with a solution containing a manganese precursor, and then adding a cobalt precursor to carry out the reaction;
preferably, the concentration of the solution containing the manganese precursor is within the range of 0. 1~0.3 mol/L;
preferably, the mode of contacting a structured support loaded with an alumina-contained coating with a solution containing a manganese precursor in step (2) is impregnating the structured support loaded with an alumina-contained coating in the solution containing a manganese precursor;
preferably, the cobalt precursor is added in the form of a solution containing the cobalt precursor, and the concentration of the solution containing the cobalt precursor is 1~8 times the concentration of the solution containing the manganese precursor.

14. The preparation method according to any one of claims 9-13, wherein step (2) comprises: contacting a structured support loaded with an alumina-contained coating with a solution containing a manganese precursor, and then heating to the reaction temperature, subsequently adding a cobalt precursor to carry out the reaction; preferably, the reaction temperature is within the range of 50~90°C, more preferably within the range of 60~80°C; preferably, the reaction time is within the range of 1~6 hours, more preferably within the range of 2~4 hours.

15. The preparation method according to any one of claims 9-14, wherein
the drying conditions in step (1) and step (2) independently comprise: a temperature of 100~150°C and a time of 8~24 hours;
the calcination conditions in step (1) comprise: a calcination temperature of 250~500°C and a calcination time of 1~6 hours.

16. A monolithic catalyst, comprising the monolithic catalytic material according to any one of claims 1-8 or the monolithic catalytic material produced with the preparation method according to any one of claims 9-15, and a precious metal component;
preferably, the precious metal component is at least one of platinum, palladium, rubidium and rhodium;
preferably, the content of the precious metal component is 0.2~2.5 g/L, based on the total volume of the monolithic catalyst;
preferably, the precious metal component has an average particle diameter within the range of 4~10nm.

17. A method for preparing a monolithic catalyst, the method comprising:
impregnating the monolithic catalytic material according to any one of claims 1-8 or the monolithic catalytic material produced with the preparation method according to any one of claims 9-15 in an impregnation liquid containing a noble metal precursor, adjusting the pH to alkalinity, preferably adjusting the pH to the range of 8~9, standing still, and then drying and calcining;
preferably, the time of standing still is within the range of 1~6 hours;
preferably, the preparation method further comprises: subjecting the product obtained after standing still to a heating treatment;
preferably, the conditions of the heating treatment comprise: a temperature of 50~80°C. and a time of 1~6 hours;
preferably, the drying conditions comprise: a temperature of 100~150°C and a time of 12~24 hours;
preferably, the calcination conditions comprise: a calcination temperature of 400~550°C and a calcination time of 1~6 hours.

18. Use of the monolithic catalytic material according to any one of claims 1-8 or the monolithic catalyst according to claim 16 in a catalytic oxidation reaction, preferably in a catalytic oxidation reaction of VOCs.

19. A method for catalytic oxidation of VOCs, the method comprises:
contacting exhaust gas containing VOCs with the monolithic catalyst according to claim 16 to carry out a catalytic oxidation reaction;
preferably, the conditions of the catalytic oxidation reaction comprise: the reaction pressure is normal pressure, the reaction temperature is within the range of 200~600°C, and the exhaust gas containing VOCs has a hourly space velocity within the range of 5,000~60,000 h⁻¹;
preferably, the concentration of VOCs in the exhaust gas containing VOCs is within the range of 500~10,000 ppmv.
